# EUROPEAN PATENT SPECIFICATION

(11) **EP 3 174 946 B1**
(45) Date of publication and mention of the grant of the patent: **28.11.2018**
(21) Application number: 15753534.5
(22) Date of filing: 31.07.2015
(51) Int. Cl.: C09D 171/02, C08G 65/336, C08L 71/02, C09J 171/02

(54) **SELF SEALING PERMEABLE AIR BARRIER COMPOSITIONS**
SELBSTDICHTENDE DURCHLÄSSIGE MIT LUFTGRENZE ZUSAMMENSETZUNGEN
COMPOSITIONS PARE-AIR PERMEABLE AUTO-SCELLANTES

(30) Priority: 01.08.2014 US 201462031944 P
(43) Date of publication of application: 07.06.2017
(73) Proprietor: 3M Innovative Properties Company, St. Paul, MN 55133-3427 (US)
(72) Inventor: BODKHE, Rajan B., Saint Paul, Minnesota 55133-3427 (US); CODDINGTON, Michael C., Saint Paul, Minnesota 55133-3427 (US); GREGAR, Travis Q., Saint Paul, Minnesota 55133-3427 (US); IIAMS NELSON, Vanessa A., Saint Paul, Minnesota 55133-3427 (US); KUGEL, Alexander J., Saint Paul, Minnesota 55133-3427 (US); LEVITT, Leon, Saint Paul, Minnesota 55133-3427 (US)
(74) Representative: Vossius & Partner Patentanwälte Rechtsanwälte mbB
(86) International application number: PCT/US2015/043119
(87) International publication number: WO 2016/019248

(56) References cited:
- EP-A1- 2 604 655
- EP-A1- 2 698 481
- WO-A1-00/37534
- WO-A1-2013/094769

## Description

### FIELD

The present disclosure relates to self-sealing permeable air barrier compositions. The present disclosure also relates to articles made using these self-sealing permeable air barrier compositions.

### BACKGROUND

Air barrier systems control movement of air, and specifically water vapor, across a surface of a structure, such as a building enclosure. In exterior walls, uncontrolled air flow is the greatest source of moisture and condensation damage. Indoor comfort is affected by air temperature, relative humidity, direction of airflow and surrounding surface temperatures. Indoor air quality is enhanced by air barrier systems by keeping pollutants out of building interiors and is an efficient way of keeping pollutants out. Pollutants include water vapor, suspended particulates, dust, insects, smells, etc. Air barrier systems have significant impact on electricity consumption and gas bills. Air barrier systems in nonresidential buildings are estimated to reduce air leakage by up to 83 percent, saving on gas bill more than 40 % and reducing electricity consumption more than 25% according to simulations by the National Institute of Standards and Technology (NIST) of typical buildings without air barriers. Water vapor is a key ingredient in corrosion and mold growth. Air barrier systems help prevent water vapor from being transported by air movement between exteriors and interiors of structures, such as buildings.

Use of air barrier systems has been a requirement in Canada for almost 25 years and is becoming important in North America due to net zero energy requirements by 2030, required by the US Army Corp of Engineering, ASHRAE 90, and International Energy Conservation Code - 2009. On December 16, 2011, the DC Construction Codes Coordinating Board (CCCB) adopted the 2012 International Energy Conservation Code (IECC).

Previously known waterproofing sheets having both waterproofing property and moisture permeability have been developed. One typical example of such moisture- permeable waterproofing sheets is flash-spun nonwoven fabrics. U.S. Pat. No. 3,169,899, for example, discloses a flash-spun nonwoven fabric. U.S. Pat. No. 3,532,589 discloses a method for producing a flash-spun nonwoven fabric. The nonwoven fabric thus obtained has an appropriate pore size. It blocks water, but allows air and water vapor to pass therethrough. A known example of the nonwoven fabric is commercially available under the trade designation "Tyvek" from E. I. Du Pont de Nemours and Company, Wilmington, Delaware USA obtained by thermo-compressing a three-dimensionally-meshed fiber of high-density polyethylene. Such a moisture-permeable waterproofing sheet can prevent external water from infiltrating through the sheet, but can drain gathered moisture as water vapor.

However, the openings such as windows or doors are not flat. It is difficult to form a waterproofing layer only with a waterproofing sheet, and therefore the opening is often finished with a waterproofing tape with a pressure sensitive adhesive layer provided thereon. In this case, since the pressure sensitive adhesive layer is made of rubber or asphalt materials, the moisture permeability of the entire tape decreases, and the same problem as that of a common waterproofing sheet can occur.

Mechanical fasteners or adhesive fasteners, such as pressure sensitive adhesive tapes, can be used to affix the moisture-permeable waterproofing sheet on substrates of exterior walls or to affix overlapped portions of two moisture-permeable waterproofing sheets. As a result, moisture may permeate from gaps of such fasteners, such as nail holes or pressure sensitive adhesive tapes, over a long period of time.

However, a composition used in a liquid-applied waterproofing material disclosed in U.S. Pat. Publ. No. 2007/0042196 A1, etc. contains a latex polymer (aqueous emulsion). Such a composition requires a long period of time to form a continuous layer if it is coated in a condition at a low temperature, or a high humidity. Thus, it is difficult to apply the composition in inclement weather conditions. Moreover, since the coating of the latex polymer is poor in elasticity, it is not able to resist a prolonged strain of a substrate. Thus, cracks, breaks, etc. may occur in or on the coating, and waterproofing property may be deteriorated.

On the other hand, it has been known that an organic polymer that contains at least one reactive silicon group in a molecule can give a rubbery cured product. Such an organic polymer can crosslink even at a room temperature by forming siloxane bond through hydrolysis of the reactive silicon group under an existence of moisture in the air. For example, WO 2011/046235 A1 discloses silyl terminated polymers. WO 2013/094769 discloses waterproof coating material comprising polyoxyalkylene polymer and/or a vinylic polymer each containing a reactive silyl group. In order to achieve acceptable permeability, functional polyether plasticizers, such as hydroxyl or amine functional polyether plasticizers, are added to silyl terminated polymer. One disadvantage with using these types of functional polyether plasticizers is storage stability of the resulting composition is adversely impacted when it is not stored in a moisture tight container. Another disadvantage with using these types of functional polyether plasticizers is heightened viscosities of compositions derived therefrom, which results in more material and labor waste from plugging and cleaning of application equipment. Another disadvantage with using these types of functional polyether plasticizers is that films made using these plasticizers are not self sealing films.

### SUMMARY

There exists a need for coating compositions that provide acceptable self sealing and permeability performance while having a particular viscosity range in order to be useful in spray applications. There is also a need for articles, films and a method of using these coating compositions.

In one aspect, the present disclosure provides a cured coating composition derived from a one-part, moisture curable composition comprising a polyoxyalkylene polymer having at least one end group derived from an alkoxy silane, and (b) a plasticizer selected from at least one of linear or branched alkyl benzoate having between 8 and 14 carbon atoms in the alkyl chain, and combinations thereof; wherein the cured coating composition passes ASTM D-1970. In some embodiments, the end groups of the polyoxyalkylene polymer are silyl terminated. In some embodiments, the polyoxyalkylene polymer further comprises at least one silyl modified branched group.

In some embodiments, the moisture curable composition is a liquid at ambient conditions. In some embodiments, the plasticizer comprises from 5 to 50 parts by weight based on 100 parts by weight of the polyoxyalkylene polymer. In some embodiments, the coating composition comprises at least 20 wt% of components (a) and (b) based on the total weight of the coating composition.

In some embodiment, the moisture curable composition also includes fillers. In some embodiment, the moisture curable composition also includes solvent or solvents. In some embodiment, the moisture curable composition also includes a tackifier. In some embodiment, the moisture curable composition also includes a chain extender.

In another aspect, the present disclosure provides an article including a substrate coated with a coating comprising the aforementioned cured coating compositions. In some embodiments, the coating is continuous.

In yet another aspect, the present disclosure provides a film comprising the aforementioned cured coating compositions. In some embodiments, the film has a water vapor permeability greater than or equal to 1.0 perms according to ASTM E 96 Procedure A. In some embodiments, the film passes ASTM D-1970.

In still another aspect, the present disclosure provides a method of coating a substrate surface including applying the aforementioned coating composition to a substrate surface and allowing it to cure. In some embodiments, the coating composition is applied at an ambient temperature of -20°C or higher.

In another aspect, the present disclosure provides a method for providing nail sealability in a surface of a structure including (a) coating at least a portion of the surface of the structure with a coating composition comprising: (i) a polyoxyalkylene polymer having at least one end group derived from an alkoxy silane, and (ii) a plasticizer selected from at least one of linear or branched alkyl benzoate having between 8 and 14 carbon atoms in the alkyl chain; and (b) curing the coating composition, where the cured coating composition passes ASTM D-1970.

Various aspects and advantages of exemplary embodiments of the present disclosure have been summarized. The above Summary is not intended to describe each illustrated embodiment or every implementation of the present disclosure. Further features and advantages are disclosed in the embodiments that follow. The Drawings and the Detailed Description that follow more particularly exemplify certain preferred embodiments using the principles disclosed herein.

### DETAILED DESCRIPTION

As used in this specification, the recitation of numerical ranges by endpoints includes all numbers subsumed within that range (e.g. 1 to 5 includes 1, 1.5, 2, 2.75, 3, 3.8, 4, and 5, and the like).

Unless otherwise indicated, all numbers expressing quantities or ingredients, measurement of properties and so forth used in the Specification and embodiments are to be understood as being modified in all instances by the term "about." Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

For the following defined terms, these definitions shall be applied for the entire Specification, including the claims, unless a different definition is provided in the claims or elsewhere in the Specification based upon a specific reference to a modification of a term used in the following Glossary:

### Glossary

The words "a", "an", and "the" are used interchangeably with "at least one" to mean one or more of the elements being described.

The term "layer" refers to any material or combination of materials on or overlaying a substrate.

Words of orientation such as "atop, "on," "covering," "uppermost," "overlaying," "underlying" and the like for describing the location of various layers, refer to the relative position of a layer with respect to a horizontally-disposed, upwardly-facing substrate. It is not intended that the substrate, layers or articles encompassing the substrate and layers, should have any particular orientation in space during or after manufacture.

The term "separated by" to describe the position of a layer with respect to another layer and the substrate, or two other layers, means that the described layer is between, but not necessarily contiguous with, the other layer(s) and/or substrate.

The term "(co)polymer" or "(co)polymeric" includes homopolymers and copolymers, as well as homopolymers or copolymers that may be formed in a miscible blend, *e.g.,* by coextrusion or by reaction, including, e.g., transesterification. The term "copolymer" includes random, block, graft, and star copolymers.

The term "permeable" as used herein means a film having a permeability of more than more than 1 perm, preferably more than 5 perms, more preferably more than 10 perms according to ASTM E 96.

The term "continuous" as used herein means a coating having an uninterrupted extension in along a two dimensional surface. For example, in some embodiments, an article having a continuous coating over a surface of a substrate may be a building envelope where the coating covers the entire outer surface of the building with no interruptions.

The term "liquid" as used herein means substances that have a definite volume but no fixed shape at ambient conditions, such as, for example, substances that are sprayable with conventional spray equipment at ambient conditions. Exemplary liquids useful in the present disclosure include solutions, mixtures, emulsions and suspensions where the primary component in such solutions, mixtures, emulsions and/or suspensions have a definite volume but no fixed shape at ambient conditions.

The present disclosure provides cured coating compositions derived from a one-part, moisture curable composition comprising a polyoxyalkylene polymer having at least one end group derived from an alkoxy silane, and a plasticizer, which are useful as self sealing articles in air barrier systems. The presently disclosed coating compositions can be applied by spray, liquid, roller, trowel, as an article and/or a film and are self sealing. In some embodiments, the presently disclosed moisture curable composition is liquid at ambient conditions.

Plasticizers useful in the present disclosure include those selected from at least one of linear or branched alkyl benzoate having between 8 and 14 carbon atoms in the alkyl chain, and combinations thereof. These plasticizers are useful to provide self sealing properties for the presently disclosed cured coating compositions, and articles and films made using the presently disclosed cured coating compositions. For example, in some embodiments, the presently disclosed cured coating compositions meet the requirements set forth in ASTM D-1970.

In some embodiments, the amount of plasticizer used in the cured coating composition is varied to achieve desired sealability of the cured coating composition and articles and films made therefrom. In some embodiments, plasticizers useful in the present disclosure include n-octyl benzoate, 2-ethylhexyl benzoate, isooctyl benzoate, n-nonyl benzoate, n-decyl benzoate, isodecyl benzoate, 2-propylheptyl benzoate, n-undecyl benzoate, isoundecyl benzoate, n-dodecyl benzoate, isododecyl benzoate, isotridecyl benzoate, n-tridecyl benzoate, triisononyl trimellitate, C₁₃-rich C₁₁-C₁₄-alkyl benzoates, and combinations thereof. In some embodiments, diethylene glycol monobenzoate, diethylene glycol dibenzoate, propylene glycol monobenzoate, propylene glycol dibenzoate, polypropylene glycol monobenzoate, polypropylene glycol dibenzoate can be used in combination with the aforementioned plasticizers.

Other ingredients useful in the presently disclosed coating compositions include various additives such as dehydrating agents, rheology additives, compatibilizers, tackifiers, physical property modifiers, photocurable substances, oxygen-curable substances, storage stability improving agents, fillers, epoxy resins, epoxy resin curing agents antioxidants, adhesion promoters, ultraviolet absorbers, metal deactivators, antiozonants, antioxidants, light stabilizers, lubricants, amine type radical chain inhibitors, phosphorus-containing peroxide decomposers, lubricants, pigments, foaming agents, solvents, flame retardants, antifungal agents, blowing agents, and antistatic agents, each in an adequate amount. These additives may be added singly to the curable composition or two or more thereof may be added in combination to the curable composition. Specific examples of these additives are disclosed in publications such as Japanese Kokoku Publications H4-69659 and H7-108928, and Japanese Kokai Publications S63-254149, S64- 22904, 2001-72854, and 2008-303650.

In the coating compositions of the present invention, there may further be added U.V. stabilizers or antioxidants in an amount of from 0-5 parts per 100 parts silyl terminated polymer. These materials improve heat stability and UV resistance, although the later effect is less important when the sealer composition of the invention is painted over. Useful sources of U.V. stabilizers and antioxidants include those available under the trade designations "TINUVIN 770", "TINUVIN 327", "TINUVIN 1130" and "TINUVIN 292" from Ciba-Geigy.

The polyoxyalkylene polymers having at least one end group derived from an alkoxy silane useful in the present disclosure are commercially available from Kaneka Corporation under the trade designations "KANEKA MS POLYMER" and "KANEKA SILYL", and from Union Carbide Specialty Chemicals Division under the trade designations "SILMOD-SAT10", "SILMOD SAT30", "SILMOD SAT 200", "SILMOD S203", "SILMOD S303", "SILMOD 20A", to name several, which were obtained from Union Carbide Company. It is explained that trade named "SILMOD" resins are the same basic chemistries as some trade named "MS" resins available from Kanegafuchi Kagaku Kogyo Kabushiki Kaisha, Osaka Japan, e.g., the sealer available under trade designation "SILMOD S203" corresponds to the sealer available under trade designation "MS S203", the sealer available under trade designation "SILMOD S303" corresponds to the sealer available under trade designation "MS S303", and the sealer available under trade designation "SILMOD 20A" corresponds to the sealer available under trade designation "MS 20A". Further, the trade designated "SILMOD" resins are the same basic chemistries as some trade designated "SILYL" resins also available from Kanegafuchi Kagaku Kogyo Kabushiki Kaisha, Osaka Japan, e.g., the sealer available under the trade designation "SILMOD SAT10" corresponds to the sealer available under the trade designation "SILYL SAT10", the sealer available under the trade designation "SILMOD SAT30" corresponds to the sealer available under the trade designation "SILYL SAT30", and the sealer available under the trade designation "SILMOD 200" corresponds to the sealer available under the trade designation "SILYL 200".

A production method of a polyoxyalkylene polymer having a reactive silicon group may include those proposed in Japanese Kokoku Publication S45-36319, Japanese Kokoku Publication S46-12154, Japanese Kokai Publication S50-156599, Japanese Kokai Publication S54-6096, Japanese Kokai Publication S55- 13767, Japanese Kokai Publication S55-13468, Japanese Kokai Publication S57-164123, Japanese Kokoku Publication H3-2450, U.S. Patent No. 3,632,557, U.S. Patent No. 4,345,053, U.S. PatentNo. 4, 366, 307, and U.S. PatentNo. 4, 960, 844, etc. Also, polyoxyalkylene polymers having a number average molecular weight of 6,000 or higher and a Mw/Mn ratio of 1.6 or lower and thus having high molecular weight and narrow molecular weight distribution as disclosed in Japanese Kokai Publication S61-197631, Japanese Kokai Publication S61-215622, Japanese Kokai Publication S61-215623, Japanese Kokai Publication S61-218632, Japanese Kokai Publication H3-72527, Japanese Kokai Publication H3-47825, and Japanese Kokai Publication H8-231707 can be exemplified, and is not limited to these examples.

In some embodiments, the main chain of the polyoxyalkylene polymer may contain another component such as a urethane bond component in an extent that the effects of the present disclosure are not significantly adversely affected. The aforementioned urethane bond component is not particularly limited and may include a group (hereinafter, also referred to as an amido segment) produced by reaction of an isocyanato group and an active hydrogen group.

The amido segment is a group represented by the following formula (I):

-NR⁵-C(=0)-

(wherein R⁵ represents a hydrogen atom or a monovalent organic group, desirably a substituted or unsubstituted monovalent C₁₋₂₀ hydrocarbon group, and more desirably a substituted or unsubstituted monovalent C₁₋₈ hydrocarbon group).

The aforementioned amido segment may specifically include a urethane group produced by reaction of an isocyanato group and a hydroxy group; a urea group produced by reaction of an isocyanato group and an amino group; and a thiourethane group produced by reaction of an isocyanato group and a mercapto group. Also, in the present disclosure, groups produced by reaction of an active hydrogen in the aforementioned urethane group, urea group, and thiourethane group further with an isocyanato group are also included as the group represented by the formula I.

Examples of methods for industrially easily producing a polyoxyalkylene polymer having an amide segment and a reactive silicon group include those disclosed in Japanese Kokoku Publication S46-12154 (U.S. Patent No. 3,632,557), Japanese Kokai Publications S58-109529 (U.S. Patent No. 4,374,237), S62-13430 (U.S. Patent No. 4,645,816), H8-53528 (EP 0676403), and H10-204144 (EP 0831108), Japanese Kohyo Publication 2003-508561 (U.S. Patent No. 6,197,912), Japanese Kokai Publications H6-211879 (U.S. Patent No. 5,364,955), H10-53637 (U.S. Patent No. 5,756,751), H11-100427, 2000-169544, 2000- 169545 and 2002-212415, Japanese Patent No. 3,313,360, U.S. Patent Nos. 4,067,844 and 3,711,445, Japanese Kokai Publications 2001-323040, H11-279249 (U.S. Patent No. 5, 990,257), 2000-119365 (U.S. Patent No. 6, 046,270), S58-29818 (U.S. Patent No. 4,345,053), H3-47825 (U.S. Patent No. 5,068,304), H11-60724, 2002-155145, and 2002-249538, WO03/018658, WO03/059981, and Japanese Kokai Publication H6-211879 (U.S. Patent No. 5,364,955), H10-53637 (U.S. Patent No. 5,756,751), H10-204144 (EP0831108), 2000-169544, 2000- 169545, 2000-119365 (U.S. Patent No. 6,046,270).

The (meth) acrylic ester polymer having a reactive silicon group may be added to the curable composition of the present invention if necessary. A (meth) acrylic ester monomer composing the main chain of the above-mentioned (meth) acrylic ester polymer is not particularly limited and various monomers may be used. Examples thereof include (meth) acrylic acid monomers such as (meth) acrylic acid, methyl (meth) acrylate, ethyl (meth) acrylate, n-propyl (meth) acrylate, isopropyl (meth) acrylate, n-butyl (meth) acrylate, isobutyl (meth) acrylate, t-butyl (meth) acrylate, n-pentyl (meth) acrylate, n-hexyl (meth) acrylate, cyclohexyl (meth) acrylate, n-heptyl (meth) acrylate, n-octyl (meth) acrylate, 2-ethylhexyl (meth) acrylate, nonyl (meth) acrylate, decyl (meth) acrylate, dodecyl (meth) acrylate, phenyl (meth) acrylate, tolyl (meth) acrylate, benzyl (meth) acrylate, 2-methoxyethyl (meth) acrylate, 3-methoxybutyl (meth) acrylate, 2-hydroxyethyl (meth) acrylate, 2-hydroxypropyl (meth) acrylate, stearyl (meth) acrylate, glycidyl (meth) acrylate, 2-aminoethyl (meth) acrylate, [γ]-(methacryloyloxypropyl) trimethoxysilane, [γ]-(methacryloyloxypropyl) dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, ethylene oxide adduct of (meth) acrylic acid, trifluoromethylmethyl (meth) acrylate, 2-trifluoromethylethyl (meth) acrylate, 2- perfluoroethylethyl (meth) acrylate, 2-perfluoroethyl-2-perfluorobutylethyl (meth) acrylate, perfluoroethyl (meth) acrylate, trifluoromethyl (meth) acrylate, bis (trifluoromethyl) methyl (meth) acrylate, 2- trifluoromethyl-2-perfluoroethylethyl (meth) acrylate, 2- perfluorohexylethyl (meth) acrylate, 2-perfluorodecylethyl (meth) acrylate, and 2-perfluorohexadecylethyl (meth) acrylate .

With respect to the (meth) acrylic ester polymer, the following vinyl monomers can be copolymerized together with a (meth) acrylic ester monomer. Examples of the vinyl monomer are styrene monomers such as styrene, vinyltoluene, a- methylstyrene, chlorostyrene, styrenesulfonic acid and its salts; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl and dialkyl esters of maleic acid; fumaric acid, and monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group- containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, and allyl alcohol. They may be used alone or a plurality of them may be copolymerized. Of them, in terms of properties such as the physical properties of a produced material, polymers comprising a styrene monomer and a (meth) acrylic acid monomer are desirable. (Meth) acrylic ester polymers comprising acrylic ester monomers and a methacrylic ester monomer are more desirable and acrylic ester polymers comprising acrylic ester monomers are further desirable. In the present disclosure, these desirable monomers may be copolymerized with other monomers and also block-copolymerized with them. In that case, these desirable monomers are desirably contained at a ratio of 40% by weight or higher. In the above descriptions, (meth) acrylic acid means acrylic acid and/or methacrylic acid.

A synthesis method of the (meth) acrylic ester polymer is not particularly limited and a conventionally known method may be employed. A polymer obtained by a common free radical polymerization method using an azo compound, a peroxide or the like as a polymerization initiator has a problem that the molecular weight distribution value is generally as high as 2 or higher and the viscosity is thus high. Accordingly, a living radical polymerization method is desirably employed in order to obtain a (meth) acrylic ester polymer having narrow molecular weight distribution and low viscosity and having a crosslinkable functional group at a molecular chain end at a high ratio. Of the "living radical polymerization methods", an "atom transfer radical polymerization method" for polymerizing a (meth) acrylic ester monomer using an organic halide, a halogenated sulfonyl compound or the like as an initiator and a transition metal complex as a catalyst has, in addition to the characteristics of the above-mentioned "living radical polymerization methods", a wide range of the options of the initiator and the catalyst because a halogen, etc. which is relatively advantageous for the functional group conversion reaction is located at a molecular chain end. The atom transfer radical polymerization method is therefore further desirable as a production method of the (meth) acrylic ester polymer having a specified functional group. Examples of the atom transfer radical polymerization method are, for example, the method disclosed in Krzysztof Matyjaszewski et al., J. Am. Chem. Soc, vol. 117, p. 5614 (1995).

Examples of a production method of the (meth) acrylic ester polymer having a reactive silicon group are production methods employing free radical polymerization methods using chain transfer agents and disclosed in Japanese Kokoku Publication H3-14068, Japanese Kokoku Publication H4-55444, and Japanese Kokai Publication H6-211922. Also, a production method employing an atom transfer radical polymerization method is disclosed in Japanese Kokai Publication H9-272714 and the like; and the method is not limited to these exemplified methods. The above-mentioned (meth) acrylic ester polymers having a reactive silicon group may be used alone or two or more kinds of them may be used in combination. A method for producing an organic polymer involving blending a polyoxyalkylene polymer having a reactive silicon group with a (meth) acrylic ester polymer having a reactive silicon group is not particularly limited, and examples thereof include those disclosed in Japanese Kokai Publication S59-122541, S63-11264, H6-172631, and Hll-116763. Further, a production method of the polyoxyalkylene polymer obtained by blending the (meth) acrylic ester polymer having a reactive silicon group may also include a method of polymerizing a (meth) acrylic ester monomer in the presence of a polyoxyalkylene polymer having a reactive silicon group. The methods are practically disclosed in Japanese Kokai Publication 559-78223, Japanese Kokai Publication S59-168014, Japanese Kokai Publication S60-228516, and Japanese Kokai Publication 560-228517, and are not particularly limited to them.

In some embodiments, the presently disclosed cured coating compositions include at least 0.1 wt%, and preferably at least 0.5 wt% of one or more water scavengers, and at most 5 wt% and preferably not more than 2 wt% of one or more water scavengers. Examples of water scavengers are silanes such as vinyltrimethoxysilane, vinyltriethoxysilane, vinylmethyldimethoxysilane, O-methylcarbamatomethyl-methyldimethoxysilane, O-methylcarbamatomethyl-trimethoxysilane, O-ethylcarbamatomethyl-methyldiethoxysilane, O-ethyl-carbamatomethyl-triethoxysilane, 3-methacryloyloxypropyltrimethoxysilane, methacryloyloxymethyl-trimethoxysilane, methacryloyloxymethylmethyldimethoxysilane, methacryloyloxymethyltriethoxysilane, methacryloxymethylmethyl-diethoxysilane, 3-acryloxyoylpropyl-trimethoxysilane, acryloyloxymethyltrimethoxysilane, acryloyloxymethylmethyldimethoxysilane, acrylmethyltriethoxysilane, acryloyloxymethylmethyldiethoxysilane, alkylalkoxysilanes in general, or else further organofunctional silanes and other aminosilanes which are described as catalysts.

In some embodiments, the presently disclosed cured coating compositions include at least 0.1 wt%, preferably at least 0.5 wt% of one or more adhesion promoters. In some embodiments, the presently disclosed cured coating compositions include at most 5 wt%, preferably not more than 2 wt% of one or more adhesion promoters. Useful sources of adhesion promoters include those available under the trade designations "A1120", "A187", and "A189" from OSI and "Z9020" from Dow Chemical. Amino silanes can be used as adhesion promoters. Specific examples of the amino silane include adhesion promoters are γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ-ureidopropyltrimethoxysilane, γ-ureidopropyltriethoxysilane, N-phenyl-γ-aminopropyltrimethoxysilane, N-phenylaminomethyltrimethoxysilane, N-benzyl-γ-aminopropyltrimethoxysilane, N-vinylbenzyl-γ-aminopropyltriethoxysilane, [Nu],[Nu]'-bis[3-trimethoxysilyl]propyl]ethylenediamine, N-cyclohexylaminomethyltrimethoxysilane, N-cyclohexylaminomethyldimethoxymethylsilane, and N-phenylaminomethyltrimethoxysilane.

In some embodiments, the presently disclosed cured coating composition may comprise one or more catalysts. The catalyst is preferably present in the presently disclosed cured coating composition in an amount of from about 0.05 wt% to about 5 wt%, more preferably from about 0.1 wt% to about 2 wt%, most preferably from about 0.1 wt% to about 1 wt%. organometallic compounds which are used as silanol condensation catalyst are preferred. The silanol condensation catalyst may be used in an amount of from about 0.01 to about 20 parts by weight per 100 parts by weight of the silyl-terminated polymer, with a more preferred addition level being from about 0.1 to about 10 parts by weight per 100 parts by weight of the silyl-terminated polymer. Examples of silanol condensation catalysts include, but are not limited to, titanate esters such as tetrabutyl titanate and tetrapropyl titanate; organotin compounds such as dibutyltin dilaurate, dibuytltin maleate, dibutyltin diacetate, stannous octylate, stannous napthenate, reaction products from dibutyltin oxide and phthalate esters, and dibutyltin diacetylacetonate; organoaluminum compounds such as aluminum trisacetylacetonate, aluminum tris(ethylacetoacetate) and diisopropocyaluminum ethyl acetoacetate; reaction products from bismuth salts and organic carboxylic acids, such as bismuth tris(2-ethylhexonate) and bismuth tris(neodecanoate); chelate compounds such as zirconium tetra-acetylacetonate and titanium tetra-acetylactonate; organolead compounds such as lead octylate; organovanadium compounds; amine compounds such as butylamine, octylamine, dibutylamine, monoethanolamine, oleylamine, cyclohexylamine, benzylamine, diethylaminopropylamine, xylenediamine, triethylenediamine, guanidine,diphenylguanidine, 2,4,6-tris(dimethylaminomethyl)phenol, morpholine, N-methylmorpholine, 2-ethyl-4-methylimidazole with carboxylic or other acids; low-molecular-weight polyamide resins derived from excess polyamines and polybasics acids; and reaction products from excess polyamines and epoxy compounds. These may be used individually or in combination. The amine compounds are not limited to one mentioned above.

In some embodiments, the presently disclosed cured coating compositions may comprise one or more pigments or fillers. Useful fillers are typically solids that are non-reactive with the other components of the compositions of the present disclosure. Useful fillers include, for example, clay, talc, dye particles, pigments and colorants (for example, TiO₂ or carbon black), glass beads, metal oxide particles, silica particles, ceramic microspheres, hollow polymeric microspheres (such as those available under the trade designation "EXPANCEL 551 DE" from Akzo Nobel, Duluth, Ga.), hollow glass microspheres (such as those available under the trade designation "K37" from Minnesota Mining and Manufacturing Co., St Paul, Minn.), carbonates, metal oxides, silicates (e.g. talc, asbestos, clays, mica), sulfates, silicon dioxide and aluminum trihydrate.

Some specific examples include ground or light calcium carbonate (with or without a surface-treatment such as a fatty acid, resin acid, cationic surfactant, or anionic surfactant); magnesium carbonate; talc; sulfates such as barium sulfate; alumina; metals in powder form (e.g., aluminum, zinc and iron); bentonite; kaolin clay; quartz powder; and combinations of two or more.

Examples of useful organic pigments include halogenated copper phthalocyanines, aniline blacks, anthraquinone blacks, benzimidazolones, azo condensations, arylamides, diarylides, disazo condensations, isoindolinones, isoindolines, quinophthalones, anthrapyrimidines, flavanthrones, pyrazolone oranges, perinone oranges, beta-naphthols, BON arylamides, quinacridones, perylenes, anthraquinones, dibromanthrones, pyranthrones, diketopyrrolo-pyrrole pigments (DPP), dioxazine violets, copper and copper-free phthalocyanines, indanthrones, and the like.

Examples of useful inorganic pigments include titanium dioxide, zinc oxide, zinc sulphide, lithopone, antimony oxide, barium sulfate, carbon black, graphite, black iron oxide, black micaceous iron oxide, brown iron oxides, metal complex browns, lead chromate, cadmium yellow, yellow oxides, bismuth vanadate, lead chromate, lead molybdate, cadmium red, red iron oxide, Prussian blue, ultramarine, cobalt blue, chrome green (Brunswick green), chromium oxide, hydrated chromium oxide, organic metal complexes, laked dye pigments and the like.

The filler can also comprise conductive particles (see, for example, U.S. Patent Application Pub. No. 2003/0051807, which is incorporated herein by reference) such as carbon particles or metal particles of silver, copper, nickel, gold, tin, zinc, platinum, palladium, iron, tungsten, molybdenum, solder or the like, or particles prepared by covering the surface of these particles with a conductive coating of a metal or the like. It is also possible to use non-conductive particles of a polymer such as polyethylene, polystyrene, phenol resin, epoxy resin, acryl resin or benzoguanamine resin, or glass beads, silica, graphite or a ceramic, whose surfaces have been covered with a conductive coating of a metal or the like.

Preferred fillers include inorganic solids such, for example, talc, titanium dioxide, silica, zirconia, calcium carbonate, calcium magnesium carbonate, glass or ceramic microspheres, and combinations thereof. In some embodiments, titanium dioxide and/or calcium carbonate are preferred.

In some embodiments, the cured coating composition comprises plasticizers. If appropriate, the cured coating composition can be produced with additional use of plasticizers in which case the plasticizers used do not contain any groups reactive toward silane/alkoxysilane. Plasticizers which can be utilized in the resinous compositions of the present disclosure include plasticizers such as polyethers, polyether esters, esters of organic carboxylic acids or anhydrides thereof, such as phthalates, for example dioctyl phthalate, diisononyl phthalate or diisodecyl phthalate, adipates, for example dioctyl adipate, azelates and sebacates. Specific examples are the dialkyl phthalates such as di-(2-ethyl-hexyl)-pththalates, dibutyl phthalate, diethyl phthalate, dioctyl phthalate, butyl octyl phthalate; dicyclohexyl phthalate, butyl benzyl phthalate; triaryl phosphates such as tricresyl phosphate, triphenyl phosphate, cresyl(liphenyl phosphate; trialkyl phosphates such as trioctyl phosphate and tributyl phosphate; alkoxyalkyl phosphates such as trisbutoxyethyl phosphate: alkyl aryl phosphates such as octyldiphenyl phosphate; alkyl adipates such as di-(2-ethylhexyl)adipate, diisooctyl adipate, octyl decyladinate; dialkyl sebacates such as dibutyl sebacate, dioctylsebacate, diisooctyl sebacate; alkyl azelates such as di(2-ethylhexyl)azelate and di-(2-ethylbutyl)azelate; citrates such as acetyl tri-n-butyl citrate, acetyl triethyl citrate, monoisopropyl citrate, triethyl citrate, mono-, di-, and tri-stearyl citrate; triacetin, p-tert-butyl and mixtures of thereof. For example, plasticizers useful in the present disclosure may include esters, such as triethylene glycol bis (2-ethylhexanoate) commercially available under the trade designation "Eastman TEG-EH" from Eastman.

The amount of additional plasticizer employed, if one is employed, will depend on the nature of the polymeric resin and the additional plasticizer.

In some embodiments, the presently disclosed cured coating compositions may comprise one or more light stabilizers and/or UV-absorbers. Light stabilizers useful in the present disclosure may include, for example, those available under the trade designation "TINUVIN(R) 292" from Ciba/BASF. UV-absorbers that may find utility in the presently disclosed coating composition may include, for example, those available under the trade designation "TINUVIN(R) 1130" from Ciba/BASF.

In some embodiments, the cured coating composition may comprise one or more solvents. Solvent should be non-reactive and examples of such includes aliphatic, aromatic or araliphatic solvent. Examples of suitable solvent include methoxypropyl acetate, methoxyethyl acetate, ethylene glycol diacetate, propylene glycol diacetate, glyme, diglyme, dioxane, tetrahydrofuran, dioxolane, tert-butyl methyl ether, ethyl acetate, butyl acetate, chloroform, methylene chloride, chlorobenzene, o-dichlorobenzene, anisole, 1,2-dimethoxybenzene, phenyl acetate, N-methyl-2-pyrrolidone, dimethylformamide, N,N-dimethylacetamide, dimethyl sulphoxide, acetonitrile, phenoxyethyl acetate and/or mixtures thereof, preferably solvent containing ether and ester groups, such as methoxypropyl acetate, acetone, 2-butanone, xylene, toluene, cyclohexanone, 4-methyl-2-pentanone, 1-methoxyprop-2-yl acetate, ethylene glycol monomethyl, 3-methoxy-n-butyl acetate, white spirit, more highly substituted aromatics such as are commercially available, for example, under the trade designations "NAPTHA", "SOLVESSO", "ISOPAR", "NAPPAR" from Deutsche EXXON CHEMICAL GmbH, Cologne, DE; "SHELLSOL" from Deutsche Shell Chemie GmbH, Eschborn, DE; methyl n-amyl ketone ("MAK") and "AROMATIC 100" "AROMATIC 150" from ExxonMobile Chemical; xylene, methyl isobutyl ketone ("MIBK") and ethyl 3-ethoxypropionate from Eastman Chemical Company; and/or methyl ethyl ketone ("MEK").

In the cured coating composition of the present disclosure, if necessary, there may be incorporated a thixotropic agent (anti-sagging agent) that prevents the cured coating composition from sagging and improves the workability thereof. The thixotropic agent is not particularly restricted but includes: polyamide waxes; hydrogenated castor oil derivatives; and metal soaps such as calcium stearate, aluminum stearate and barium stearate. Further, when those rubber powders having a particle size of 10 to 500 µm which are disclosed in Japanese Kokai Publication H11-349916, and those organic fibers disclosed in Japanese Kokai Publication 2003-155389 are used, it is possible to obtain a curable composition which has high thixotropy and favorable workability. These thixotropic agents (anti-sagging agents) may be used singly or two or more species may be used in combination. The addition level of the thixotropic agent is desirably 0.05 to 15 parts by weight per 100 parts by weight of silyl terminated polymer.

In some embodiments, the presently disclosed cured coating composition includes at least one chain extender. Any chain extender can be used as long as it does not have a significant adverse effect on whether films made using the cured coating composition are self sealing films. Exemplary chain extenders useful in the present disclose include α-difunctional silanes, such as those commercially available under the trade designation "GENIOSIL XL 65" from Wacker Chemie AG, Munich, Germany.

In some embodiments, the presently disclosed cured coating composition includes at least one tackifier. Useful tackifiers for the presently disclosed cured coating composition include rosin esters, aromatic resins, aliphatic resins, synthetic resins, and terpene resins. Exemplary tackifiers useful in the present disclosure include natural rubber, acrylics, block copolymers, C5 synthetic resins (such as, for example, p-styrene/rubber block copolymers), C9 synthetic resins (such as, for example, p-styrene/rubber block copolymers), combinations thereof, and the like.

In some embodiments, films made using the presently disclosed cured coating composition have moisture vapor transmission rate of greater than 1 perm, more preferably greater than 5 perms, and most preferably more than 10 perm according to ASTM E96 method.

In some embodiments, the presently disclosed cured coating composition is used to make an article having a substrate coated with a cured coating comprising the presently disclosed. In some embodiments, the coating is continuous. In some embodiments, thickness of the coating is varied to achieve desired permeability of the article. In some embodiments, the amount of plasticizer used in the cured coating composition is varied to achieve desired sealability of the article. In some embodiments, the amount of plasticizer used in the cured coating composition and the thickness of the coating are varied to achieve desired sealability of the article.

In some embodiments, the present disclosure provides a film made using the presently disclosed cured coating composition. In some embodiments, the film has a permeability of greater than 1 perm, preferably more than 5 perms, more preferably more than 10 perms according to ASTM E 96. In some embodiments, the presently disclosed films have at least 200 % elongation and moisture vapor transmission rates of 11 perms to 30 perms according to ASTM E 96. In some embodiments, thickness of the coating is varied to achieve desired sealability and/or permeability of the film. In some embodiments, the amount of plasticizer and/or additional plasticizer used in the cured coating composition, which is used in the film, is varied to achieve desired sealability and/or permeability of the film. For example, in some embodiments, articles and films made using the presently disclosed cured coating composition meet the requirements of ASTM D-1970.

The presently disclosed cured coating composition is useful in a method of coating a substrate surface including the steps of applying the presently disclosed composition to a substrate surface and allowing it to cure. In some embodiments, the cured coating composition is applied and cured at an ambient temperature of -20°C or higher.

The present disclosure also provides a method for allowing water vapor transport and blocking air and liquid water across a surface of a structure including the steps of: (a) coating at least a portion of the surface of the structure with any of the presently disclosed embodiments for composition; and (b) curing the composition. In some embodiments, the cured coating composition, article and/or film is applied on an exterior sheathing layer, which is commonly plywood, oriented strand board (OSB), foam insulation sheathing, nonwoven glass mat faced gypsum sheathing board, or other conventional sheathing materials commonly used in the construction industry. Useful exterior cladding layer is made up of brick, concrete blocks, reinforced concrete, stone, vinyl siding, fiber cement board, clapboard, or other known exterior siding materials. In some embodiments, the cured coating composition, article and/or film is applied to a roofing deck, an attic floor or other attic surface, a boundary between a wall, roof system, and/or foundation, other interior or exterior surfaces of a structure, or used as flashing around a roof penetration.

Following are exemplary embodiments and combinations of embodiments according to the present disclosure:
Embodiment 1. A cured coating composition derived from a one-part, moisture curable composition comprising:
   (a) a polyoxyalkylene polymer having at least one end group derived from an alkoxy silane, and
   (b) a plasticizer selected from at least one of linear or branched alkyl benzoate having between 8 and 14 carbon atoms in the alkyl chain, and combinations thereof;
   wherein the cured coating composition passes ASTM D-1970.
Embodiment 2. The cured coating composition of Embodiment 1 wherein all of the end groups of the polyoxyalkylene polymer are silyl terminated.
Embodiment 3. The cured coating composition of any of the preceding embodiments wherein the polyoxyalkylene polymer further comprises at least one silyl modified branched group.
Embodiment 4. The cured coating composition of any of the preceding embodiments wherein the moisture curable composition is a liquid at ambient conditions.
Embodiment 5. The cured coating composition of any of the preceding embodiments, wherein the plasticizer comprises from 5 to 50 parts by weight based on 100 parts by weight of the polyoxyalkylene polymer.
Embodiment 6. The cured coating composition of any of the preceding embodiments wherein the coating composition comprises at least 20 wt% of components (a) and (b) based on the total weight of the coating composition.
Embodiment 7. The cured coating composition of any of the preceding embodiments further comprising fillers.
Embodiment 8. The cured coating composition of any of the preceding embodiments further comprising solvent or solvents.
Embodiment 9. The cured coating composition of any of the preceding embodiments wherein the coating composition further comprises a tackifier.
Embodiment 10. The cured coating composition of any of the preceding embodiments wherein the coating composition further comprises a chain extender.
Embodiment 11. An article comprising a substrate coated with a coating comprising the cured coating composition of any of the preceding embodiments.
Embodiment 12. The article of embodiment 11 wherein the coating is continuous.
Embodiment 13. A film comprising the coating composition of any of the preceding embodiments.
Embodiment 14. The film of Embodiment 13 wherein the film has a water vapor permeability greater than or equal to 1.0 perms according to ASTM E 96 Procedure A.
Embodiment 15. The film of embodiment 14 wherein the film passes ASTM D-1970.
Embodiment 16. A method of coating a substrate surface comprising applying the coating composition according to any of embodiments 1 to 10 to a substrate surface and allowing it to cure.
Embodiment 17. The method of embodiment 16 wherein the coating composition is applied at an ambient temperature of -20°C or higher.
Embodiment 18. A method for providing nail sealability in a surface of a structure comprising:
   (a) coating at least a portion of the surface of the structure with a coating composition comprising:
      (i) a polyoxyalkylene polymer having at least one end group derived from an alkoxy silane, and
      (ii) a plasticizer selected from at least one of linear or branched alkyl benzoate having between 8 and 14 carbon atoms in the alkyl chain; and
   (b) curing the coating composition
   wherein the cured coating composition passes ASTM D-1970.

Following are various embodiments of the present disclosure:

### EXAMPLES

The following examples are intended to illustrate exemplary embodiments within the scope of this disclosure. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

### Raw Material and Suppliers List

| **Raw Material Trade Designation** | **Description** | **Supplier** |
|---|---|---|
| KANEKA MS POLYMER S303H | A liquid, silyl-terminated polyether derived from a polyether polymer backbone and having methyldimethoxysilane functional groups and a viscosity of 10,000 to 15,000 centiPoise | Kaneka Polymers, Pasadena, TX |
| KANEKA MS POLYMER S203H | A liquid, silyl-terminated polyether derived from a polyether polymer backbone and having methyldimethoxysilane functional groups and a viscosity of 6000 to 10,000 centiPoise | Kaneka Polymers, Pasadena, TX |
| KANEKA MS POLYMER S327 | A liquid, silyl-terminated polyether derived from a polyether polymer backbone and having methyldimethoxysilane functional groups viscosity 25,000 to 43,000 centiPoise | Kaneka Polymers, Pasadena, TX |
| AEROSIL R202 | A hydrophobic fumed silica aftertreated with a polydimethylsiloxane | Evonik Degussa Corporation, Parsippany, NJ |
| HDK H18 | Synthetic, hydrophobic, amorphous silica, produced via flame hydrolysis | Wacker Chemie AG, Munich, Germany |
| OMYACARB 5-FL | A beneficiated calcium carbonate having a mean particle size of 6.3 micrometers and a calcium carbonate content of 98% | Omya Inc., Cincinnati, OH |
| TP 39966-FL | A treated, beneficiated calcium carbonate having a mean diameter of 5 micrometers | Omya Inc., Cincinnati, OH |
| ULTRA-PFLEX PRECIPITATED CALCIUM CARBONATE | A precipitated calcium carbonate having an average particle size of 0.07 micrometers and which has been surface treated | Specialty Minerals Inc., Adams, MA |
| TIONA 696 | A non-chalking, chlorie-process rutile titanium dioxide pigment having a titanium dioxide content of 92%, and a surface treatment of alumina, silica, organic | Cristal Global, Hunt Valley, MD |
| TI-PURE R-706 TITANIUM DIOXIDE | A rutile titanium dioxide pigment, manufactured by the chloride process and is supplied as a fine, dry powder | E.I Du Pont de Nemours and Co., Wilmington, DE |
| SILVERLINE 202 | A talc having a median diameter of 19.8 micrometers | Imerys Ceramics, North America, Roswell, GA |
| DYNASLAN DAMO-T | A liquid, bifunctional organosilane having two reactive amino groups and hydrolyzable inorganic methoxysilyl groups | Evonik Degussa Corporation, Parsippany, NJ |
| DYNASLAN VTMO | A liquid, bifunctional organosilane having a reactive vinyl group and a hydrolyzable inorganic trimethoxysilyl group | Evonik Degussa Corporation, Parsippany, NJ |
| GENIOSIL XL65 | A liquid, alkoxysilane having an O-methyl carbamate organofunctional group, N-Dimethoxy(methyl)silylmethyl-O-methyl-carbamate, having utility as a water scavenging compound | Wacker Chemie AG, Munich, Germany |
| BYK W980 | Wetting and dispersing additive to reduce viscosity and prevent fi llers from settling in ambient curing resin systems and adhesives | BYK-CHEMIE GMBH, Wesel, Germany |
| NEOSTANN U220H | A liquid catalyst based on dibutyl tin bis(acetylacetoacetonate) having a tin content of 27.5% | Kaneka Polymers, Pasadena, TX |
| Xylene | | Sigma-Aldrich Chemical Co., St. Louis, MO |
| HALLSTAR TP-90B | A highly compatible plasticizer designed to provide maximum low temperature flexibility to various types of elastomers including natural rubber, SBR, chloroprene, nitrile and epichlorohydrin. | Hallstar, Bedford Park, IL |
| HALLSTAR TP-759 | A mixed ether ester type plasticizer that exhibits low volatility | |
| EASTMAN TEG-EH | Triethylene Glycol Bis (2-EthylHexanoate), a plasticizer | Eastman Chemical Company, Kingsport, TN |
| Triethyl Citrate | | Sigma-Aldrich Chemical Co., St. Louis, MO |
| BENZOFLEX 131 | a clear, low viscosity organic liquid that is useful as a specialty plasticizer | Eastman Chemical Company, Kingsport, TN |

### Test Methods

### Method for Testing Nail Sealibility

Nail sealability of the coatings made by the Examples described below was evaluated generally as described in ASTM D1970/D1970M-13 "Standard Specification for Self-Adhering Polymer Modified Bituminous Sheet Materials Used as Steep Roofing Underlayment for Ice Dam Protection", Paragraph 7.9: "Self Sealability. Head of Water Test" with some modifications.

The modifications to the test were as follows: A plywood substrate having a thickness of 3/8 inches (0.95 cm) was employed; four nails were driven through the coating until the nail head contacted the top surface of the coating, then the nail was pulled backed out until 6.35 millimeters (0.25 inches) remained above the exposed surface of the coating and that a red dye was added to the water. After exposure the surface of plywood substrate in contact with the coating (referred to herein as the "topside"), and the surface of the plywood substrate opposite the topside (referred to herein as the "bottomside") were inspected visually by unaided eye for signs of water leakage as determined by the presence of red-stained areas around each of the four nails. Such stained areas would be indicative of failure of the coating to form a seal around the nails. Samples were rated "A" if all four of the nail areas on the plywood substrate were free of dye staining; "B" if 3 of the nail areas on the plywood substrate were free of dye staining; "C" if 2 of the nail areas on the plywood substrate were free of dye staining; "D" if 1 of the nail areas on the plywood substrate were free of dye staining; "E" if none of the nail areas on the plywood substrate were free of dye staining.

All materials were conditioned at (23 °C (73 °F)) for at least 24 hours prior to testing.

### Method for testing Tear Strength

The tear strength of the coatings (free films) made by the Examples described below was evaluated generally as described in ASTM 624-00 (reapproved 2012) "Standard Test Method for Tear Strength of Conventional Vulcanized Rubber and Thermoplastic Elastomers".

### Example 1 (EX1) and Comparative Examples 2-24 (CEX2-CEX24)

A mixture (Mix 1) was prepared using a DAC 400 FVZ SPEEDMIXER dual asymmetric centrifuge mixer (from Flacktek, Inc Landrum, SC). Formulation components KANEKA MS POLYMER S203H (160 g), AEROSIL R202 (5 g), OMYACARB 5-FL (107 g), Titanium oxide TIONA 696 (17.5 g) were charged into a mixing vessel, placed in the mixer and mixed at 2500 rpm for 4 minutes and then DYNASLAN DAMO-T (3.5 g), DYNASLAN VTMO (3.5 g), NEOSTANN U220H (0.75 g) and xylene (29 g) were charged into the mixing vessel and mixed for an additional 2 minutes at 1500 rpm.

To prepare EX1 and CEX2--EX24 formulations a desired amount of Mix 1 was poured in a 100 g FlackTek cup and then blending in a predetermined amount of plasticizer and optionally a resin using a 150DAC SPEEDMIXER dual asymmetric centrifuge mixer, (from FlackTek, Inc Landrum, SC). The formulations of EX1 and CEX2-EX24 are summarized in Table 1, below.

EX1 and CEX2--EX24 formulations were then coated using a notched bar coater on TEFLON substrates at 50 mil (1.27 mm) wet thickness for free film analysis. The coatings were made on wood 3/8" (0.95 cm) at 50 mil (1.27 mm) wet thickness. The coatings were allowed to cure at 20°C and 50% relative humidity for 7 days.

Tear strength (of free films) and nail sealability (on plywood substrates) of the resulting coatings was evaluated using the test methods described above. The test results are summarized in Table 4, below.

### Examples 25-27 (EX25-EX27)

EX25 formulation was prepared by using a 150DAC SPEEDMIXER dual asymmetric centrifuge mixer, (FlackTek, Inc., Landrum, SC). First, formulation components KANEKA MS POLYMER S303H (42.14 g), and BYK W980 (0.31 g) were mixed until a uniform mixture was formed and then OMYCARB 5-FL (26.78 g) and TI-PURE R-706 TITANIUM DIOXIDE (4.26 g) were added and mixed until a uniform mixture was formed. To the resulting mixture BENZOFLEX 131 (15.37 g) and HDK H18 (1.49 g) were added and mixed until uniform mixture was formed followed by adding DYNASLAN DAMO-T (0.87 g) and GENIOSIL XL 65 (1.74 g). The mixture was again mixed until uniform mixture was formed. Finally, Xylene (6.88 g) and NEOSTANN U220H (0.19 g) were added and mixed until uniform mixture was formed to prepare the formulation of EX25. The mixing was done under inert nitrogen atmosphere.

EX26 and EX27 were prepared in the same manner as EX25 except that the formulations were varied as summarized in Table 2, below.

**Table 2**

| Ingredients | EX25 | EX26 | EX27 |
|---|---|---|---|
| | Weight of ingredients used (g) | | |
| KANEKA MS POLYMER S303H | 42.14 | 42.04 | 37.75 |
| KANEKA MS POLYMER S203H | 0 | 0 | 4.2 |
| BYK W980 | 0.31 | 0.31 | 0.31 |
| HDK H18 | 1.49 | 1.48 | 1.49 |
| OMYCARB 5-FL | 26.78 | 0 | 0 |
| SILVERLINE 202 | 0 | 26.72 | 26.80 |
| TI-PURE R-706 TITANIUM DIOXIDE | 4.26 | 4.25 | 4.27 |
| BENZOFLEX 131 | 15.37 | 15.33 | 15.38 |
| DYNASLAN DAMO-T | 0.87 | 0.86 | 0.86 |
| GENIOSIL XL 65 | 1.74 | 1.72 | 1.64 |

EX25-EX27 formulations were then coated using a notched bar coater on TEFLON substrates at 50 mil (1.27 mm) wet thickness for free film analysis. The coatings were made on wood 3/8" (0.95 cm) at 50 mil (1.27 mm) wet thickness. The coatings were allowed to cure at 20°C and 50% relative humidity for 7 days.

Tear strength (of free films) and nail sealability (on plywood substrates) of the resulting coatings was evaluated using the test methods described above. The test results are summarized in Table 4, below.

### Examples 28-30 (EX28-EX30)

EX28 formulation was prepared by using a 150DAC SPEEDMIXER dual asymmetric centrifuge mixer, (FlackTek, Inc Landrum, SC). First, formulation components KANEKA MS POLYMER S203H (40 g), of AEROSIL R202 (1.25 g), OMYACARB 5-FL (27 g), and titanium dioxide TIONA 696 (4.35 g) were charged into a mixing vessel, placed in the mixer and mixed at 2500 rpm for 4 minutes and then BENZOFLEX 131 (18.9 g) plasticizer was added and mixed for an additional 1 minute at 2500 rpm. Following this, DYNASYLAN DAMO-T (0.87 g) and DYNASYLAN VTMO (0.87 g) were charged into mixing vessel and the contents were mixed at 2500 rpm for 1 minute. After this time, of the xylene (6.56 g) solvent was added to same mixing vessel and mixed at 1500 rpm for 1 minute. Finally, catalyst NEOSTANN U220H (0.20 g) was added and mixed at 2500 rpm for 30 seconds to prepare the formulation of EX28.
EX29 and EX30 formulations were prepared in the same manner as EX28, except that the formulations were varied as summarized in Table 3, below.

**Table 3**

| Ingredients | EX28 | EX29 | EX30 |
|---|---|---|---|
| | Weight of ingredients used (g) | | |
| KANEKA MS POLYMER S303H | 40 | 40 | 40 |
| AEROSIL R202 | 1.25 | 1.25 | 1.25 |
| OMYCARB 5-FL | 27 | 20 | 0 |
| ULTRA-PFLEX PCC | 0 | 7 | 0 |
| TP 39966-FL | 0 | 0 | 27 |
| TIONA 696 | 4.35 | 4.35 | 4.35 |
| BENZOFLEX 131 | 18.9 | 18.9 | 18.9 |
| DYNASLAN DAMO-T | 0.87 | 0.87 | 0.87 |
| DYNASLAN VTMO | 0.87 | 0.87 | 0.87 |
| Xylene | 6.56 | 6.56 | 6.56 |
| NEOSTANN U220H | 0.20 | 0.20 | 0.20 |

EX28-EX30 formulations were then coated using a notched bar coater on TEFLON substrates at 50 mil (1.27 mm) wet thickness for free film analysis. The coatings were made on wood 3/8" (0.95 cm) at 50 mil (1.27 mm) wet thickness. The coatings were allowed to cure at 20°C and 50% relative humidity for 7 days.

Tear strength (of free films) and nail sealability (on plywood substrates) of the resulting coatings was evaluated using the test methods described above. The test results are summarized in Table 4, below.

**Table 4**

| Examples | Elongation at peak (cm) | Energy to break (Kg*cm) | Energy, peak/ Energy at break (%) | Load/ thickness (kg/cm) | Nail sealibility rating | Film thickness (mm) |
|---|---|---|---|---|---|---|
| EX1 | 8.56 | 1.97 | 94.00 | 4.18 | A | 1.01 |
| CEX2 | 4.32 | 1.06 | 94.00 | 7.05 | D | 0.64 |
| CEX3 | 6.22 | 1.27 | 94.00 | 4.94 | D | 0.74 |
| CEX4 | 6.40 | 0.82 | 86.00 | 3.05 | C | 0.67 |
| CEX5 | 5.92 | 1.64 | 100.00 | 7.10 | D | 0.75 |
| CEX6 | 6.60 | 1.12 | 96.00 | 4.86 | C | 0.65 |
| CEX7 | 9.32 | 2.02 | 90.00 | 4.05 | E | 0.91 |
| CEX8 | 7.77 | 1.06 | 90.00 | 3.69 | E | 0.64 |
| CEX9 | 6.50 | 1.01 | 80.00 | 3.30 | E | 0.70 |
| CEX10 | 8.23 | 1.56 | 91.00 | 4.52 | E | 0.73 |
| CEX11 | 7.62 | 1.43 | 92.00 | 4.28 | D | 0.74 |
| CEX12 | 10.34 | 1.72 | 90.00 | 3.91 | D | 0.71 |
| CEX13 | 10.82 | 1.84 | 86.80 | 3.14 | E | 0.88 |
| CEX14 | 8.99 | 1.15 | 88.40 | 3.46 | E | 0.64 |
| CEX15 | 9.22 | 1.38 | 86.10 | 3.87 | D | 0.63 |
| CEX16 | 9.42 | 1.38 | 89.20 | 3.93 | E | 0.63 |
| CEX17 | 9.75 | 1.27 | 86.60 | 3.30 | E | 0.65 |
| CEX18 | 4.80 | 0.92 | 80.30 | 3.82 | B | 0.73 |
| CEX19 | 5.11 | 0.92 | 83.40 | 4.02 | D | 0.72 |
| CEX20 | Not done due to migration in sample | | | | | |
| CEX21 | Not done due to migration in sample | | | | | |
| CEX22 | 11.73 | 1.84 | 77.60 | 3.25 | D | 0.73 |
| CEX23 | 12.57 | 1.38 | 75.00 | 2.75 | B | 0.55 |
| CEX24 | Not done due to migration in sample | | | | | |
| EX25 | 15.49 | 1.20 | 74.90 | 2.77 | A | 0.69 |
| EX26 | 14.27 | 1.15 | 71.60 | 2.44 | A | 0.69 |
| EX27 | 15.47 | 1.28 | 73.10 | 2.35 | A | 0.69 |
| EX28 | 8.13 | 1.30 | 94.00 | 3.88 | A | 0.74 |
| EX29 | 8.18 | 1.46 | 93.00 | 4.35 | A | 0.72 |
| EX30 | 9.19 | 0.85 | 95.00 | 2.55 | A | 0.67 |

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove. Various exemplary embodiments have been described. These and other embodiments are within the scope of the following listing of disclosed embodiments.

## Claims

1. A cured coating composition derived from a one-part, moisture curable composition comprising:
(a) a polyoxyalkylene polymer having at least one end group derived from an alkoxy silane, and
(b) a plasticizer selected from at least one of linear or branched alkyl benzoate having between 8 and 14 carbon atoms in the alkyl chain, and combinations thereof;
wherein the cured coating composition passes ASTM D-1970, as defined in the description.

2. The cured coating composition of claim 1, wherein all of the end groups of the polyoxyalkylene polymer are silyl terminated.

3. The cured coating composition of any of the preceding claims, wherein the polyoxyalkylene polymer further comprises at least one silyl modified branched group.

4. The cured coating composition of any of the preceding claims, wherein the moisture curable composition is a liquid at ambient conditions.

5. The cured coating composition of any of the preceding claims, wherein the plasticizer comprises from 5 to 50 parts by weight based on 100 parts by weight of the polyoxyalkylene polymer.

6. The cured coating composition of any of the preceding claims, wherein the coating composition comprises at least 20 wt% of components (a) and (b) based on the total weight of the coating composition.

7. The cured coating composition of any of the preceding claims, further comprising one or more fillers.

8. The cured coating composition of any of the preceding claims, further comprising solvent or solvents and/or a tackifier.

9. The cured coating composition of any of the preceding claims, wherein the coating composition further comprises a chain extender.

10. An article comprising a substrate coated with a coating comprising the cured coating composition of any of the preceding claims.

11. The article of claim 10, wherein the coating is continuous.

12. A film comprising the coating composition of any of claims 1 to 9.

13. The film of claim 12, wherein the film has a water vapor permeability greater than or equal to 1.0 perms according to ASTM E 96 Procedure A.

14. The film of claim 13 wherein the film passes ASTM D-1970, as defined in the description.

15. A method for providing nail sealability in a surface of a structure comprising:
(a) coating at least a portion of the surface of the structure with a coating composition comprising:
(i) a polyoxyalkylene polymer having at least one end group derived from an alkoxy silane, and
(ii) a plasticizer selected from at least one of linear or branched alkyl benzoate having between 8 and 14 carbon atoms in the alkyl chain; and
(b) curing the coating composition
wherein the cured coating composition passes ASTM D-1970, as defined in the description.

## Patentansprüche

1. Gehärtete Beschichtungszusammensetzung, abgeleitet von einer einteiligen, feuchtigkeitshärtbaren Zusammensetzung, umfassend:
(a) ein Polyoxyalkylenpolymer mit mindestens einer Endgruppe, die von einem Alkoxysilan abgeleitet ist, und
(b) einen Weichmacher, ausgewählt aus mindestens einem von linearem oder verzweigtem Alkylbenzoat mit zwischen 8 und 14 Kohlenstoffatomen in der Alkylkette und Kombinationen davon;
wobei die gehärtete Beschichtungszusammensetzung ASTM D-1970, wie in der Beschreibung definiert, besteht.

2. Gehärtete Beschichtungszusammensetzung nach Anspruch 1, wobei alle Endgruppen des Polyoxyalkylenpolymers silylterminiert sind.

3. Gehärtete Beschichtungszusammensetzung nach einem der vorstehenden Ansprüche, wobei das Polyoxyalkylenpolymer ferner mindestens eine silylmodifizierte verzweigte Gruppe umfasst.

4. Gehärtete Beschichtungszusammensetzung nach einem der vorstehenden Ansprüche, wobei die feuchtigkeitshärtbare Zusammensetzung bei Umgebungsbedingungen eine Flüssigkeit ist.

5. Gehärtete Beschichtungszusammensetzung nach einem der vorstehenden Ansprüche, wobei der Weichmacher von 5 bis 50 Gewichtsteile, bezogen auf 100 Gewichtsteile des Polyoxyalkylenpolymers, umfasst.

6. Gehärtete Beschichtungszusammensetzung nach einem der vorstehenden Ansprüche, wobei die Beschichtungszusammensetzung zu mindestens 20 Gew.-% Komponenten (a) und (b), bezogen auf das Gesamtgewicht der Beschichtungszusammensetzung, umfasst.

7. Gehärtete Beschichtungszusammensetzung nach einem der vorstehenden Ansprüche, ferner umfassend einen oder mehrere Füllstoffe.

8. Gehärtete Beschichtungszusammensetzung nach einem der vorstehenden Ansprüche, ferner umfassend Lösungsmittel oder mehrere Lösungsmittel und/oder einen Klebrigmacher.

9. Gehärtete Beschichtungszusammensetzung nach einem der vorstehenden Ansprüche, wobei die Beschichtungszusammensetzung ferner einen Kettenverlängerer umfasst.

10. Artikel, umfassend ein Substrat, das mit einer Beschichtung beschichtet ist, die die gehärtete Beschichtungszusammensetzung nach einem der vorstehenden Ansprüche umfasst.

11. Artikel nach Anspruch 10, wobei die Beschichtung durchgängig ist.

12. Folie, umfassend die Beschichtungszusammensetzung nach einem der Ansprüche 1 bis 9.

13. Folie nach Anspruch 12, wobei die Folie eine Wasserdampfdurchlässigkeit größer oder gleich 1,0 Perms gemäß ASTM E 96 Verfahren A aufweist.

14. Folie nach Anspruch 13, wobei die Folie ASTM D-1970, wie in der Beschreibung definiert, besteht.

15. Verfahren zum Bereitstellen einer Nagelsiegelfähigkeit in einer Oberfläche einer Struktur, umfassend:
(a) Beschichten mindestens eines Abschnitts der Oberfläche der Struktur mit einer Beschichtungszusammensetzung, umfassend:
(i) ein Polyoxyalkylenpolymer mit mindestens einer Endgruppe, die von einem Alkoxysilan abgeleitet ist, und
(ii) einen Weichmacher, ausgewählt aus mindestens einem von linearem oder verzweigtem Alkylbenzoat mit zwischen 8 und 14 Kohlenstoffatomen in der Alkylkette; und
(b) Härten der Beschichtungszusammensetzung,
wobei die gehärtete Beschichtungszusammensetzung ASTM D-1970, wie in der Beschreibung definiert, besteht.

## Revendications

1. Composition de revêtement durcie dérivée d'une composition durcissable à l'humidité en une partie, comprenant :
(a) un polymère polyoxyalkylène ayant au moins un groupe terminal dérivé d'alcoxysilane, et
(b) un plastifiant choisi parmi au moins l'un parmi un benzoate d'alkyle linéaire ou ramifié ayant entre 8 et 14 atomes de carbone dans la chaîne alkyle, et des combinaisons de ceux-ci ;
dans laquelle la composition de revêtement durcie répond à l'ASTM D-1970, comme défini dans la description.

2. Composition de revêtement durcie selon la revendication 1, dans laquelle tous les groupes terminaux du polymère polyoxyalkylène sont à terminaison silyle.

3. Composition de revêtement durcie selon l'une quelconque des revendications précédentes, dans laquelle le polymère polyoxyalkylène comprend en outre au moins un groupe ramifié à modification silyle.

4. Composition de revêtement durcie selon l'une quelconque des revendications précédentes, dans laquelle la composition durcissable à l'humidité est un liquide dans des conditions ambiantes.

5. Composition de revêtement durcie selon l'une quelconque des revendications précédentes, dans laquelle le plastifiant constitue de 5 à 50 parties en poids sur la base de 100 parties en poids du polymère polyoxyalkylène.

6. Composition de revêtement durcie selon l'une quelconque des revendications précédentes, dans laquelle la composition de revêtement comprend au moins 20 % en poids de composants (a) et (b) sur la base du poids total de la composition de revêtement.

7. Composition de revêtement durcie selon l'une quelconque des revendications précédentes, comprenant en outre une ou plusieurs charges.

8. Composition de revêtement durcie selon l'une quelconque des revendications précédentes, comprenant en outre un solvant ou des solvants et/ou un agent poisseux.

9. Composition de revêtement durcie selon l'une quelconque des revendications précédentes, dans laquelle la composition de revêtement comprend en outre un agent d'allongement de chaîne.

10. Article comprenant un substrat revêtu d'un revêtement comprenant la composition de revêtement durcie selon l'une quelconque des revendications précédentes.

11. Article selon la revendication 10, dans lequel le revêtement est continu.

12. Film comprenant la composition de revêtement selon l'une quelconque des revendications 1 à 9.

13. Film selon la revendication 12, dans lequel le film a une perméabilité à la vapeur d'eau supérieure ou égale à 1,0 perm selon la Procédure A de l'ASTM E 96.

14. Film selon la revendication 13, dans lequel le film répond à l'ASTM D-1970, comme défini dans la description.

15. Procédé pour fournir une étanchéité aux clous dans une surface d'une structure comprenant :
(a) le revêtement d'au moins une partie de la surface de la structure avec une composition de revêtement comprenant :
(i) un polymère polyoxyalkylène ayant au moins un groupe terminal dérivé d'alcoxysilane, et
(ii) un plastifiant choisi parmi au moins l'un parmi un benzoate d'alkyle linéaire ou ramifié ayant entre 8 et 14 atomes de carbone dans la chaîne alkyle ; et
(b) le durcissement de la composition de revêtement
dans lequel la composition de revêtement durcie répond à l'ASTM D-1970, comme défini dans la description.
